# EUROPEAN PATENT SPECIFICATION

(11) **EP 3 149 386 B1**
(45) Date of publication and mention of the grant of the patent: **01.07.2020**
(21) Application number: 15725038.2
(22) Date of filing: 28.05.2015
(51) Int. Cl.: F16L 59/14, F16L 59/153, B32B 15/02, B32B 15/14, B32B 15/18, B32B 27/08, B32B 27/12, B32B 27/32, B32B 1/08, F16L 33/28

(54) **CRYOGENIC TRANSFER HOSE**
KRYOGENER UMFÜLLUNGSSCHLAUCH
TUYAU DE TRANSFERT CRYOGÉNIQUE

(30) Priority: 28.05.2014 EP 14290155
(43) Date of publication of application: 05.04.2017
(73) Proprietor: Trelleborg Industrie SAS, 63050 Clermont-Ferrand Cedex (FR)
(72) Inventor: LAGARRIGUE, Vincent, F-63400 Chamalières (FR); HERMARY, James, F-63100 Clermont-Ferrand (FR)
(74) Representative: Ström & Gulliksson AB
(86) International application number: PCT/EP2015/061896
(87) International publication number: WO 2015/181321

(56) References cited:
- DE-U1- 8 504 102
- US-A- 3 845 974
- US-A1- 2008 202 620
- US-A1- 2010 183 371
- US-A1- 2011 017 337

## Description

### TECHNICAL FIELD

The present invention relates to a cryogenic transfer hose of the hose-in-hose design, as well as a method of producing the same.

### BACKGROUND

Cryogenic transfer hoses are already known in the art, for example from WO2008/071637A2, where a basic type of cryogenic transfer hose is described which includes an inner hose and an outer hose arranged around the inner hose. In the space between these two hoses there is arranged an insulation material.

In WO2008/017868A2 a hose for cryogenic transfer is described which includes an outer tube, an inner tubular structure and an insulation layer. The outer tube consists of a rubber layer and a reinforced layer, and the inner tubular structure includes a tubular body. The insulation layer is either incorporated in the inner tubular structure and/or is disposed between the inner tubular structure and the outer tube. The components of the inner tubular structure are all moveable in relation to one another, i.e. they are not bonded or otherwise fixedly adhered to one another. This is meant to allow the layers to move in relation to one another during flexing of the inner tubular structure.

This type of composite hose is tightened by winding films with overlap; consequently the structure is not bonded together. This results in a not completely tight seal, a so called "labyrinth seal", in which small amounts of liquid may migrate between the overlaps and into the structure. The "labyrinth seal" is not 100% tight; it only reduces the leakage rate. When the hose is used for cryogenic purposes, this becomes a problem since the liquid trapped between the overlaps will change from liquid to vapour during warm up of the hose. This may damage the hose significantly.

Another example of a hose suitable for cryogenic fluid is disclosed in US2011/0017337A1. This hose comprises means for detecting leakage, meaning that leakage is expected to happen with this kind of hose. It further comprises an insulating layer which liquid nitrogen gas hardly permeates. It is apparent that a tighter hose is desirable.

As to further background art, US3845974A and US2010/0183371A1 should be mentioned as well.

From the above it is apparent that there is room for improvements.

### SUMMARY

An object of the present invention is to provide a new type of cryogenic transfer hose which is improved over prior art and which eliminates or at least mitigates the drawbacks discussed above.

This object has now been achieved by a cryogenic transfer hose which is defined in appended claim 1, and with preferred embodiments set forth in the dependent claims. The object is also achieved by the method set forth in appended claim 14.

In a first aspect of the invention, there is provided a cryogenic transfer hose which comprises: an inner hose defining a flow channel for cryogenic fluid, an outer hose which encloses the inner hose, and an intermediate insulation element arranged between the outer hose and the inner hose. The insulation element comprises a multilayer structure and each layer comprises an open structure material. The multilayer structure combined with the open structure material provides the hose with a favourable insulating capacity.

According to the invention the open structure material comprises a 3D fabric. This is advantageous since it may contain more insulating air than prior-art fabrics used in this kind of hose structures.

In a preferred embodiment, the 3D fabric comprises a polymer material, which preferably is PET. It is an advantage to use a polymer material since it is flexible enough at low temperatures. Furthermore, PET is a material that remains particularly flexible at cryogenic temperatures, without being too fragile. Another advantage of PET is its good resistance to fatigue and that it does not become brittle at cryogenic temperatures. Since it is a knitted fabric, it retains both its thickness as well as other properties after both bending and compression. The PET fabric features a preferable combination of flexibility and compression ability.

According to the invention the insulation element comprises several layers, preferably up to 50 layers, most preferred 3-20 layers. The thickness of each layer of the open structure insulation material may be in the range of 2-20 mm. The number of layers depends on the diameter of the cryogenic transfer hose and serves to optimize the insulating effect while still maintaining the flexibility of the hose.

In one embodiment, the inner hose has an inner diameter of about 500 mm (20 inches) and in this embodiment the insulation element comprises seven to nine, preferably eight, layers, each of which with a thickness of ca 7 mm. This provides the 500 mm (20-inch) hose with a favourable combination of insulation capacity and flexibility, due to not too many layers of insulation.

In another embodiment, the intermediate insulation element comprises a main insulation section extending along the hose, and end sections arranged at each end of the hose. The main section is flexible, and the end sections are non-flexible. The advantage of this structure is that the main part of the cryogenic transfer hose is flexible, but the non-flexible end sections provide stability for a possible interconnection of two hoses.

Preferably, the main section of the intermediate insulation element comprises an open structure material, and the end sections comprise a metal portion as well as an insulation portion. This makes the whole hose well insulated, the major part of the hose is flexible and thanks to the metal portion, the end sections make the hose stable enough to interconnect with another cryogenic transfer hose.

The metal portion may comprise aluminium, which has an advantage of being lightweight.

In a preferred embodiment, a film is sandwiched between each pair of the insulation layers of the insulation element. The thickness of the film may range between 50 µm and 0.5 mm. The advantage of the film is that it improves the insulation of the hose by limiting the heat convection. It creates barriers and limits vortex formations.

Preferably, the film sandwiched between each pair of the insulation layer of the insulation element comprises UHMW-PE. This is an advantageous material since it has a high resistance to wear. In one embodiment the thickness of the UHMW-PE film is in range of 50 µm-0.5 mm.

In a preferred embodiment, the inner hose comprises a bonded sealing sleeve. The bonded sealing sleeve makes the hose almost completely tight, guaranteeing that no liquid migrates into the hose structure where it may cause severe damage. With an almost completely tight sealing sleeve the advantage is that no liquid can migrate into the construction and cause damage to the hose. Preferably, the bonded sealing sleeve comprises UHMW-PE, which is an advantageous material since it has a high resistance to wear. Other advantages of UHMW-PE are very good resistance to fatigue, also at cryogenic temperatures. This material has low melting temperature and mechanical properties at ambient temperature which makes it advantageous for the manufacturing process of the hose.

In one embodiment, the inner hose is made up by layers of PET fabric, PTFE film and UHMW-PE film. The advantages of this design are that the PET fabric insulates the structure and contributes to support hydrostatic pressure. Further it contributes to the insulation of the hose The UHMW-PE film forms the sealing sleeve, and the PTFE film forms a protecting barrier between the PET fabric and the UHMW-PE film. During manufacturing, this barrier structure is advantageous since it means that melted UHMW-PE film does not penetrate the PET fabric. Preferably, the thickness of the UHMW-PE film is in the range 50 µm-2 mm, and the thickness of the PTFE film may be in the range 12.7 µm-0.5 mm.

In a second aspect of the invention, there is provided a method of manufacturing a cryogenic transfer hose. The method comprises the steps of providing an inner hose, which defines a flow channel for cryogenic liquid; providing an outer hose which encloses the inner hose; and arranging an insulation element sandwiched between the inner hose and the outer hose. The insulation element is formed as a multilayer structure, in which each layer comprises an open structure insulation material which comprises a 3D fabric.

### BRIEF DESCRIPTION OF THE DRAWINGS

Embodiments of the invention will be described in the following; reference being made to the appended diagrammatical drawings which illustrate non-limiting examples of how the inventive concept can be reduced into practice and in which:
Fig. 1 is an axial cross section of a cryogenic transfer hose showing the coupling portions where two hose sections are connected,
Fig. 2 is a cross section of a cryogenic transfer hose,
Fig. 3 is a cross sectional portion of the intermediate insulation element shown in Fig. 2 at a larger scale, and
Fig. 4 is a cross sectional portion of the inner hose, shown in Fig. 2, on a larger scale, including a bonded sealing sleeve, as well as a number of layers of different materials to be removed after the manufacturing process.

### DETAILED DESCRIPTION

Certain embodiments will now be described more fully hereinafter with reference to the accompanying drawings. The invention may, however, be embodied in many different forms and should not be construed as limited to the embodiments set forth herein; rather, these embodiments are provided by way of example so that this disclosure will be thorough and complete, and will fully convey the scope of the invention to those skilled in the art.

The hose in hose concept typically includes an inner hose in contact with the conveyed fluid, and a reinforcement outer hose. The inner and the outer hoses are separated by an annular insulation volume.

The inner hose remains flexible at cryogenic temperature, and supports the hydrostatic pressure, while the outer hose strengthens and stiffens the assembly, supports severe external loadings, and limits the elongation resulting from the pressure (due to a so called "end cap effect").

The outer hose is based on marine bonded hose technology, and it is made of rubber reinforced with steel cables, and steel rings. The minimal temperature those materials can withstand is -50°C.

The hose in hose design results in specific requirements regarding the materials filling the insulation annulus. Firstly, it is desirable that the thermal performance of the insulation allows for keeping the outer hose components above -50°C, while limiting heat ingress and thus boiling off gas formation. The equivalent thermal conductivity of the insulation material should be lower than 100 mW/mK. Secondly, it is desirable that the insulation material remains flexible at cryogenic temperature. Thirdly, when the hose is under pressure, the stress distribution between the inner and the outer hose results in a contact pressure exerted by the inner hose on the insulation material, which tends to reduce the insulation thickness. To preserve the insulation performance, it is desirable that the material presents a high compressive stiffness.

The isolation, or spacer, fabric of the hose is preferably a double wall knitted fabric including two walls, knitted with multi-filament yarns, and a number of monofilament yarns, linking both walls.

Yarn of PET is selected as insulation material due to its good fatigue performance, and its ability to work at cryogenic temperature. This material presents orthotropic properties, combining flexibility at cryogenic temperature and high compressive stiffness. The open structure of this material allows a rapid annulus blanketing, consisting in removing oxygen and moisture from the annulus. Potential natural gas permeation is also easily evacuated. For a hose with an inner diameter of 500 mm, the insulation annulus may be filled with eight layers of 3D fabric, each 6 mm thick, separated by an UHMW-PE film, to reduce natural convection.

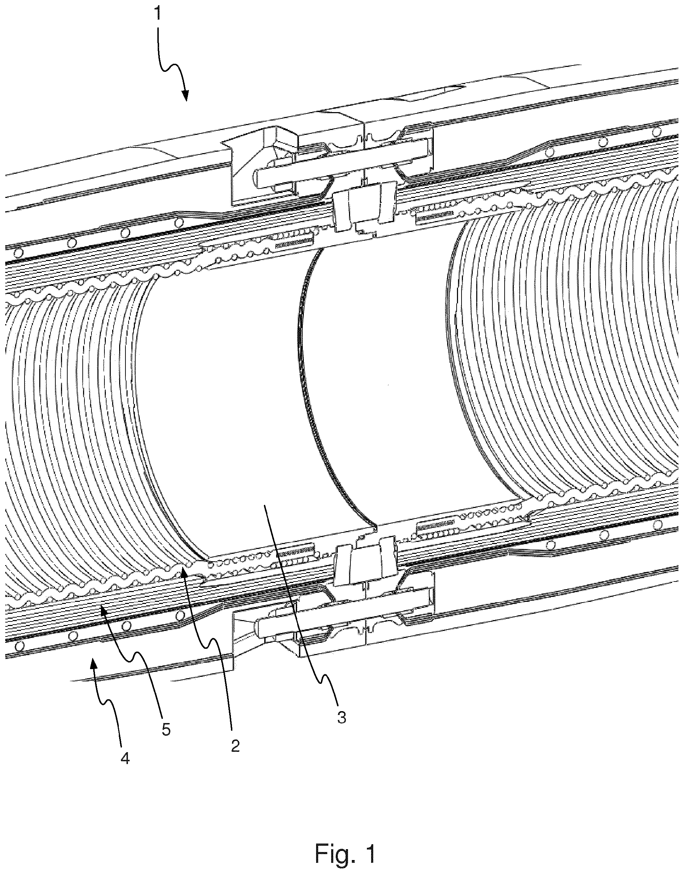

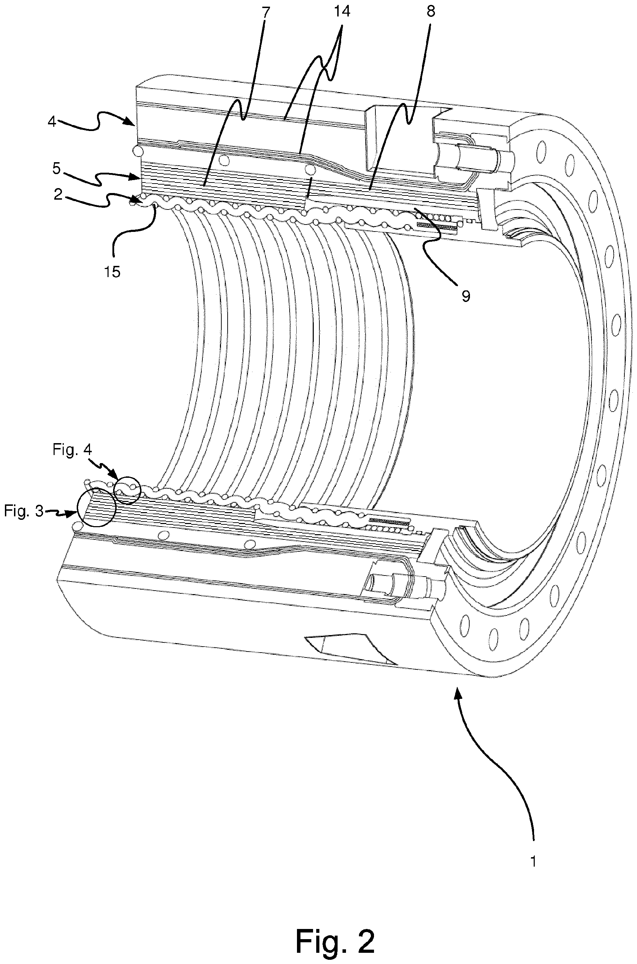

With reference to Figs 1 and 2, there is shown a cross-section of the connection portions of two cryogenic transfer hoses 1 for offshore application according to an embodiment of the invention. The two hoses 1 or hose assemblies are in Fig. 1 interconnected via non-flexible end sections 8, creating an open flow channel 3 for cryogenic liquid.

In Fig. 2, a cross-section of a cryogenic transfer hose 1 according to an embodiment of the invention is shown. The hose 1 is based on a "hose in hose"-concept, where the cryogenic hose comprises an inner hose and an outer hose, separated by an annular insulation volume. The inner hose may comprise a thin bonded sealing sleeve which completely seals the inner hose. Since the sealing sleeve is almost completely tight, the fluid cannot migrate into the hose structure. As a result of the convoluted shape and thin thickness of the sleeve, it remains flexible at cryogenic temperatures. The cryogenic transfer hose 1 includes an inner hose 2, an outer hose 4, and an intermediate insulation element 5. The outer hose 4 comprises a flexible rubber, for instance mainly natural rubber, reinforced with steel cables and rings 14. The inner hose 2 is surrounded by two layers of helical wire 15 which gives the inner hose 2 a convoluted appearance, enhancing the flexibility of the hose 1.

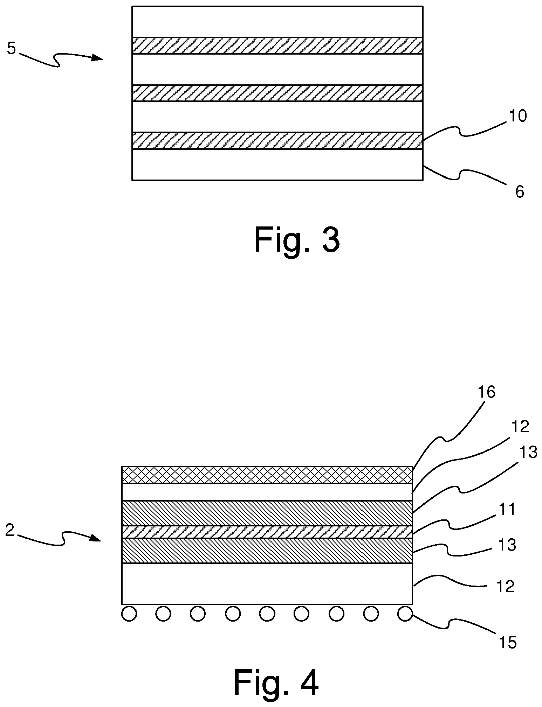

The intermediate insulation element 5 includes a main insulation section 7 and end sections 8 arranged at either end of the hose 1. The main insulation section 7 extends along the hose 1 and is flexible, whereas the end sections 8 are non-flexible in order to form a stable interconnection between two adjacent hose sections. The flexible main section 7 comprises a multilayer open structure insulation material, which comprises a 3D fabric, comprising PET, shown in more detail in Fig. 3 and described more thoroughly in connection with this. The number of layers 6 in the multilayer structure depends on the diameter of the hose 1, providing a favourable combination of insulation and flexibility of the hose 1.

Tests performed show that 7-9 layers of the insulation material prove favourable results, in particular eight 3D fabric layers. In a variant, a modified insulation layer structure is used including one layer of fleece material covering the inner hose and then eight 3D fabric layers covering the fleece layer.

The non-flexible end section 8 includes a metal portion, which preferably comprises aluminium. Further, the non-flexible end section 8 has an insulation portion, preferably comprising rigid foam, but it could also comprise - at least to some extent - a flexible fibrous fleece material, or an open structure insulation material. Since also the non-flexible end section 8 comprises insulation, the greater part of the hose 1 is insulated and there are few parts where coldness may leak out of the structure.

Fig. 3 shows one example of a portion of the multilayer open structure insulation material of the intermediate insulation element 5 on a larger scale. In this embodiment, the insulation element 5 comprises four layers 6 of insulation material, i.e. open structure 3D fabric material. In one embodiment, the open structure insulation material of the intermediate insulation element 5 comprises a polymer material, which preferably is PET. The thickness of the open structure insulation material, i.e. one insulation layer 6, is preferably in the range 2 mm-20 mm. In the case of a 500 mm (20-inch) diameter hose, the thickness of the open structure insulation material is preferably 6 mm. The number of layers of the insulation element 5 varies with the diameter of the hose 1, but all hoses have in common that the insulation 5 comprises several layers 6 of material. In a 500 mm (20-inch) hose, seven layers 6 of insulation is preferred. The preferred number of insulation layers 6 could in other embodiments range between 2 and 50.

Between each layer 6 of 3D fabric, a plastics film 10 is sandwiched. This film 10 could in one embodiment be a plastics film, preferably comprising UHMW-PE. The thickness of the film 10 is preferably in the range 50 µm-0.5 mm. In the case of the 500 mm (20-inch) diameter hose, the thickness of the film 10 is preferably 80 µm. The film 10 is provided within the structure in order to improve the insulation of the hose 1 by limiting the heat convection. The film 10 forms a barrier for heat convection. It also limits vortex formations, thus improving the insulation capacity of the hose 1.

During the manufacturing process of the intermediate insulation element 5, nitrogen gas is preferably passed through the insulation layers 6 to remove air (i.e. oxygen and moisture) before the insulation element 5 is completely sealed. A reason for the air removal is to avoid ice formation inside the intermediate insulation element 5, since such an ice formation would reduce the insulation properties.

Fig. 4 shows different layers of material making up the inner hose 2 during one part of a manufacturing process of one embodiment of the cryogenic transfer hose 1. In this embodiment, the manufacturing process comprises the following steps: wrapping different materials around a mandrel, heating the assembly, removing some of the layers, wrapping, heating, removing, and continuing in that way until the desired number of layers are achieved. The materials that are wrapped around the mandrel are in this embodiment, in order from the inside of the hose and out: steel wire 15, two layers of fabric 12, one layer of a first film 13, two layers of a second film 11, one layer of the first film 13, one layer of fabric 12, and a PA tape 16.

After wrapping the layers of different materials 11, 12, 13, 15, 16 the whole inner hose 2 structure is heated to a point above the melting point of the second film 11. The second film 11 is thus melted, but, thanks to the first film 13 which separates the fabric 12 from the second film 11, the fabric 12 is not penetrated by the melted film 11. The inner hose 2 structure is then let to cool back to room temperature after which the PA tape 16, the last layer of fabric 12 and the last layer of the first film 13 are removed.

The manufacturing process goes on by wrapping two additional layers of fabric 12, one layer of the first film 13, two layers of the second film 11, one layer of the first film 13, one layer of fabric 12 and the PA tape 16. The hose structure 2 is again heated and the further layer of the film 11 is melted. This winding, heating/melting, removing and cooling process is repeated until the desired amount of layers is achieved. Furthermore, the manufacturing process is terminated by the winding of an outer steel wire 15.

A fluid migration prohibiting seal is thus achieved in the finished inner hose 2 by the melted layers of the film 11, also referred to as the bonded sealing sleeve 11. This provides the cryogenic transfer hose 1 with a reduced risk of fluid migrating into the structure, and thereby reducing the risk of damaging the hose as the fluid transforms from liquid to gas.

The first film 13 comprises PTFE and the thickness of this film 13 is in the range 12.7 µm-0.5 mm. The second film 11 comprises UHMW-PE and forms the bonded sealing sleeve 11, which is 100% tight. The thickness of the UHMW-PE film 11 is in the range 50 µm-2 mm. The diameter of the steel wire 15 is in the range 2 mm-20 mm. The fabric 12 comprises PET. The thickness of the PET-fabric 12 is 0.55 mm. The PA tape is wrapped with overlap under high tension. The PA tape is wrapped with the same pitch as the steel wire.

### Example

A cryogenic transfer hose with a 3D insulation according to an embodiment of the present invention has been tested in comparison with a prior-art type of cryogenic transfer hose. The tested 3D insulation hose was built up by an inner hose comprising layers of PET-fabric, UHMW-PE film and PTFE film, an intermediate 3D insulation element and finally an outer hose of rubber material. The outer hose had steel cable and wire reinforcements. The 3D insulation element consisted of layers of a 3D fabric of PET. The tested prior-art hose was basically the type disclosed in WO2008/071637A2 referred to in the Background, and it was built up by an inner hose and an outer plastic hose. Between the inner and the outer hose a fleece insulation material was arranged.

Tests regarding the compression stiffness as well as the collapse pressure at cryogenic temperatures were performed. The results of these insulation tests are presented in the table below.

**Table No. 1**

| | **Unit** | **Temperature** | **3D insulation hose** | **Fleece insulation hose (prior art)** |
|---|---|---|---|---|
| **Compression stiffness (thicknesswise direction)** | MPa | -160°C | 4.16 | N/A |
| | | -100°C | 3.54 | 0.14 |
| | | +23°C | 2.05 | 0.12 |
| **Collapse pressure (thicknesswise direction)** | MPa | -160°C | 0.65 | N/A |
| | | -100°C | 0.48 | ≈ 0¹ |
| | | +23°C | 0.38 | ≈ 0² |

| | | | | |
|---|---|---|---|---|
| 1) Loss of thickness = 71% under 0,1 MPa 2) Loss of thickness = 82% under 0,1 MPa | | | | |

From these tests it is understood that the 3D insulation element improves the properties of a hose built up in accordance with an embodiment of the invention.

It is appreciated that the inventive concept is not limited to the embodiments described above, and many modifications are feasible within the scope of the invention set forth in the appended claims. As described, the number of layers can vary within the insulation element and hose dimensions, wall thicknesses, etc, can vary as well.

## Claims

1. A cryogenic transfer hose which is of hose-in-hose design and configured for offshore application, said hose comprising:
an inner hose (2) defining a flow channel (3) for cryogenic fluid;
an outer hose (4) enclosing the inner hose (2); and
an intermediate insulation element (5) which is sandwiched between the outer hose (4) and the inner hose (2) in an annular insulation volume separating the outer hose and the inner hose;
wherein the insulation element (5) comprises a multilayer structure, **characterised in that** each layer (6) of the multilayer structure comprises an open structure insulation material which comprises a 3D fabric.

2. The cryogenic transfer hose as claimed in claim 1, wherein said 3D fabric comprises a polymer material, preferably PET.

3. The cryogenic transfer hose as claimed in claim 1 or 2, wherein the insulation element (5) comprises up to 50 layers (6), preferably 3-20 layers (6), and wherein the thickness of each layer (6) of the open structure insulation material is in the range 2-20 mm.

4. The cryogenic transfer hose as claimed in claim 3, wherein the inner hose (2) has an inner diameter of about 500 mm (20 inches) and wherein the insulation element (5) comprises seven layers (6), each of which having a thickness of ca 7 mm.

5. The cryogenic transfer hose as claimed in any one of the preceding claims, wherein the intermediate insulation element (5) comprises a main insulation section (7) extending along the hose (1), and end sections (8) arranged at each end of the hose (1), wherein said main insulation section (7) is flexible whereas said end sections (8) are non-flexible, wherein said main insulation section (7) comprises said open structure material, and wherein said end sections (8) comprise a metal portion (9) which preferably comprises aluminum.

6. The cryogenic transfer hose as claimed in any one of the preceding claims, wherein a film (10) is sandwiched between each pair of insulation layers (6) of the insulation element (5).

7. The cryogenic transfer hose as claimed in claim 6, wherein the film (10) is a plastics film, preferably comprising UHMW-PE.

8. The cryogenic transfer hose as claimed in claim 6 or 7, wherein the thickness of the film (10) is in the range 50 µm-0.5 mm.

9. The cryogenic transfer hose as claimed in any one of the preceding claims, wherein the inner hose (2) comprises a bonded sealing sleeve (11).

10. The cryogenic transfer hose as claimed in claim 9, wherein said bonded sealing sleeve comprises a UHMW-PE film (11).

11. The cryogenic transfer hose as claimed in claim 10, wherein the inner hose (2) is made up by layers of PET fabric (12), PTFE film (13), and said UHMW-PE film (11).

12. The cryogenic transfer hose as claimed in claim 11, wherein the thickness of the UHMW-PE film (11) is in the range 50 µm-2 mm.

13. The cryogenic transfer hose as claimed in claim 11, wherein the thickness of the PTFE film (13) is in the range 12.7 µm-0.5 mm.

14. A method of manufacturing a cryogenic transfer hose as clamed in claim 1, comprising the steps of:
(i) providing an inner hose (2) defining a flow channel (3) for cryogenic fluid;
(ii) providing an outer hose (4) which encloses the inner hose (2); and
(iii) arranging an insulation element (5) sandwiched between the inner hose (2) and the outer hose (4), the insulation element (5) being formed as a multilayer structure, each layer (6) comprising an open structure insulation material which comprises a 3D fabric.

15. Use of a cryogenic transfer hose according to any of the claims 1-13 for transporting cryogenic liquid.

## Patentansprüche

1. Tieftemperatur-Umfüllschlauch, der einen Schlauch-in-Schlauch-Aufbau aufweist und zur Offshore-Anwendung ausgestaltet ist, wobei der Schlauch umfasst:
einen Innenschlauch (2), der einen Strömungskanal (3) für Tieftemperaturfluid definiert;
einen Außenschlauch (4), der den Innenschlauch (2) umschließt; und
ein Isolier-Zwischenelement (5), das zwischen dem Außenschlauch (4) und dem Innenschlauch (2) in einem ringförmigen Isoliervolumen angeordnet ist, das den Außenschlauch und den Innenschlauch trennt;
wobei das Isolierelement (5) eine mehrschichtige Struktur umfasst, **dadurch gekennzeichnet, dass** jede Schicht (6) der mehrschichtigen Struktur ein Isoliermaterial mit offener Struktur umfasst, das ein 3D-Gewebe umfasst.

2. Tieftemperatur-Umfüllschlauch nach Anspruch 1, wobei das 3D-Gewebe ein Polymermaterial, vorzugsweise PET, umfasst.

3. Tieftemperatur-Umfüllschlauch nach Anspruch 1 oder 2, wobei das Isolierelement (5) bis zu 50 Schichten (6), vorzugsweise 3-20 Schichten (6), umfasst und wobei die Dicke jeder Schicht (6) des Isoliermaterials mit offener Struktur im Bereich von 2-20 mm liegt.

4. Tieftemperatur-Umfüllschlauch nach Anspruch 3, wobei der Innenschlauch (2) einen Innendurchmesser von etwa 500 mm (20 Inch) aufweist und wobei das Isolierelement (5) sieben Schichten (6) umfasst, die jeweils eine Dicke von ca. 7 mm aufweisen.

5. Tieftemperatur-Umfüllschlauch nach einem der vorangehenden Ansprüche, wobei das Isolier-Zwischenelement (5) einen Hauptisolierabschnitt (7), der sich entlang des Schlauchs (1) erstreckt, und Endabschnitte (8), die an jedem Ende des Schlauchs (1) angeordnet sind, umfasst, wobei der Hauptisolierabschnitt (7) flexibel ist, wohingegen die Endabschnitte (8) nicht flexibel sind, wobei der Hauptisolierabschnitt (7) das Material mit offener Struktur umfasst und wobei die Endabschnitte (8) einen Metallteil (9) umfassen, der vorzugsweise Aluminium umfasst.

6. Tieftemperatur-Umfüllschlauch nach einem der vorangehenden Ansprüche, wobei zwischen jedem Paar von Isolierschichten (6) des Isolierelements (5) eine Folie (10) angeordnet ist.

7. Tieftemperatur-Umfüllschlauch nach Anspruch 6, wobei die Folie (10) eine Kunststofffolie ist, die vorzugsweise UHMWPE umfasst.

8. Tieftemperatur-Umfüllschlauch nach Anspruch 6 oder 7, wobei die Dicke der Folie (10) im Bereich von 50 µm-0,5 mm liegt.

9. Tieftemperatur-Umfüllschlauch nach einem der vorangehenden Ansprüche, wobei der Innenschlauch (2) eine haftschlüssig verbundene Dichthülle (11) umfasst.

10. Tieftemperatur-Umfüllschlauch nach Anspruch 9, wobei die haftschlüssig verbundene Dichthülle eine UHMWPE-Folie (11) umfasst.

11. Tieftemperatur-Umfüllschlauch nach Anspruch 10, wobei der Innenschlauch (2) durch Schichten aus PET-Gewebe (12), PTFE-Folie (13) und der UHMWPE-Folie (11) gebildet wird.

12. Tieftemperatur-Umfüllschlauch nach Anspruch 11, wobei die Dicke der UHMWPE-Folie (11) im Bereich von 50 µm-2 mm liegt.

13. Tieftemperatur-Umfüllschlauch nach Anspruch 11, wobei die Dicke der PTFE-Folie (13) im Bereich von 12,7 µm-0,5 mm liegt.

14. Verfahren zur Herstellung eines Tieftemperatur-Umfüllschlauchs nach Anspruch 1, das folgende Schritte umfasst:
(i) Bereitstellen eines Innenschlauchs (2), der einen Strömungskanal (3) für Tieftemperaturfluid definiert;
(ii) Bereitstellen eines Außenschlauchs (4), der den Innenschlauch (2) umschließt; und
(iii) Anordnen eines Isolierelements (5), das zwischen dem Innenschlauch (2) und dem Außenschlauch (4) angeordnet ist, wobei das Isolierelement (5) als mehrschichtige Struktur ausgebildet ist, wobei jede Schicht (6) ein Isoliermaterial mit offener Struktur umfasst, das ein 3D-Gewebe umfasst.

15. Verwendung eines Tieftemperatur-Umfüllschlauchs nach einem der Ansprüche 1-13 zum Transportieren von Tieftemperaturflüssigkeit.

## Revendications

1. Conduite de transfert cryogénique de conception conduite dans conduite et conçue pour des applications en mer, ladite conduite comprenant:
une conduite intérieure (2) délimitant un canal d'écoulement (3) de fluide cryogénique;
une conduite extérieure (4) enfermant la conduite intérieure (2); et
un élément d'isolation intermédiaire (5) qui est pris en sandwich entre la conduite extérieure (4) et la conduite intérieure (2) dans un volume d'isolation annulaire séparant la conduite extérieure et la conduite intérieure;
dans laquelle l'élément d'isolation (5) comprend une structure multicouche, **caractérisée en ce que** chaque couche (6) de la structure multicouche comprend un matériau d'isolation à structure ouverte qui comprend un tissu 3D.

2. Conduite de transfert cryogénique selon la revendication 1, dans laquelle ledit tissu 3D comprend un matériau polymère, de préférence du PET.

3. Conduite de transfert cryogénique selon la revendication 1 ou 2, dans laquelle l'élément d'isolation (5) comprend jusqu'à 50 couches (6), de préférence de 3 à 20 couches (6), et dans laquelle l'épaisseur de chaque couche (6) du matériau d'isolation à structure ouverte s'inscrit dans la plage de 2 à 20 mm.

4. Conduite de transfert cryogénique selon la revendication 3, dans laquelle la conduite intérieure (2) a un diamètre intérieur d'environ 500 mm (20 pouces) et dans laquelle l'élément d'isolation (5) comprend sept couches (6), chacune d'entre elles ayant une épaisseur d'environ 7 mm.

5. Conduite de transfert cryogénique selon l'une quelconque des revendications précédentes, dans laquelle l'élément d'isolation intermédiaire (5) comprend une section d'isolation principale (7) s'étendant le long de la conduite (1), et des sections d'extrémité (8) disposées au niveau de chaque extrémité de la conduite (1), dans laquelle ladite section d'isolation principale (7) est flexible tandis que lesdites sections d'extrémité (8) ne sont pas flexibles, dans laquelle ladite section d'isolation principale (7) comprend ledit matériau à structure ouverte, et dans laquelle lesdites sections d'extrémité (8) comprennent une partie métallique (9) qui comprend de préférence de l'aluminium.

6. Conduite de transfert cryogénique selon l'une quelconque des revendications précédentes, dans laquelle un film (10) est pris en sandwich entre les couches de chaque paire de couches d'isolation (6) de l'élément d'isolation (5) .

7. Conduite de transfert cryogénique selon la revendication 6, dans laquelle le film (10) est un film de plastique, comprenant de préférence de l'UHMW-PE.

8. Conduite de transfert cryogénique selon la revendication 6 ou 7, dans laquelle l'épaisseur du film (10) s'inscrit dans la plage de 50 µm à 0,5 mm.

9. Conduite de transfert cryogénique selon l'une quelconque des revendications précédentes, dans laquelle la conduite intérieure (2) comprend un manchon d'étanchéité collé (11).

10. Conduite de transfert cryogénique selon la revendication 9, dans laquelle ledit manchon d'étanchéité collé comprend un film d'UHMW-PE (11).

11. Conduite de transfert cryogénique selon la revendication 10, dans laquelle la conduite intérieure (2) est constituée de couches de tissu de PET (12), d'un film de PTFE (13) et dudit film d'UHMW-PE (11).

12. Conduite de transfert cryogénique selon la revendication 11, dans laquelle l'épaisseur du film d'UHMW-PE (11) s'inscrit dans la plage de 50 µm à 2 mm.

13. Conduite de transfert cryogénique selon la revendication 11, dans laquelle l'épaisseur du film de PTFE (13) s'inscrit dans la plage de 12,7 µm à 0,5 mm.

14. Procédé de fabrication d'une conduite de transfert cryogénique selon la revendication 1, comprenant les étapes consistant à:
(i) utiliser une conduite intérieure (2) délimitant un canal d'écoulement (3) de fluide cryogénique;
(ii) utiliser une conduite extérieure (4) qui enferme la conduite intérieure (2); et
(iii) disposer un élément d'isolation (5) pris en sandwich entre la conduite intérieure (2) et la conduite extérieure (4), l'élément d'isolation (5) étant formé en tant que structure multicouche, chaque couche (6) comprenant un matériau d'isolation à structure ouverte qui comprend un tissu 3D.

15. Utilisation d'une conduite de transfert cryogénique selon l'une quelconque des revendications 1 à 13 pour transporter un liquide cryogénique.
